# EUROPÄISCHE PATENTSCHRIFT

(11) **EP 3 365 203 B1**
(45) Veröffentlichungstag und Bekanntmachung des Hinweises auf die Patenterteilung: **06.01.2021**
(21) Anmeldenummer: 16767259.1
(22) Anmeldetag: 16.09.2016
(51) Int. Cl.: B60T 7/12

(54) **VERFAHREN UND VORRICHTUNG ZUR DURCHFÜHRUNG EINER FAHRERUNABHÄNGIGEN BREMSKRAFTHALTEFUNKTION BEI EINEM KRAFTFAHRZEUG BEI DESSEN STILLSTAND AN EINER IN FAHRZEUGLÄNGSRICHTUNG GENEIGTEN FAHRBAHN**
METHOD AND DEVICE FOR CARRYING OUT A DRIVER-INDEPENDENT BRAKE FORCE HOLDING FUNCTION IN A MOTOR VEHICLE WHEN SAME IS STATIONARY ON A ROAD INCLINED IN THE LONGITUDINAL DIRECTION OF THE VEHICLE
PROCÉDÉ ET DISPOSITIF DE MISE EN OEUVRE D'UNE FONCTION DE MAINTIEN DE FORCE DE FREINAGE INDÉPENDANTE DU CONDUCTEUR DANS UN VÉHICULE À L'ARRÊT SUR UNE CHAUSSÉE INCLINÉE DANS LA DIRECTION LONGITUDINALE DU VÉHICULE

(30) Priorität: 19.10.2015 DE 102015220283
(43) Veröffentlichungstag der Anmeldung: 29.08.2018
(73) Patentinhaber: Robert Bosch GmbH, 70442 Stuttgart (DE)
(72) Erfinder: BAEHRLE-MILLER, Frank, 71101 Schoenaich (DE)
(86) Internationale Anmeldenummer: PCT/EP2016/072084
(87) Internationale Veröffentlichungsnummer: WO 2017/067725

(56) Entgegenhaltungen:
- DE-A1-102004 062 811
- DE-A1-102007 027 357
- FR-A1- 3 014 806

## Beschreibung

### Stand der Technik

Aus dem Stand der Technik bekannt sind Funktionen für Kraftfahrzeuge, welche das Fahrzeug für eine definierte Zeit festbremsen.

Im Rahmen einer bekannten AVH-Funktion, wobei AVH für "Automated Vehicle Hold" steht, wird das Fahrzeug bei einer Steigung oder einem Gefälle und erkanntem Stillstand so lange durch Bremseingriffe im Stillstand gehalten, bis ein entsprechender Anfahrwunsch erkannt wird. Bei Vorliegen dieses Anfahrwunsches reduziert das Bremssystem den Bremsdruck und gibt das Fahrzeug wieder für die Fahrt frei. Wird während des Stillstands eine unbeabsichtigte Fahrzeugbewegung erkannt, obwohl kein Anfahrwunsch vorliegt, dann wird durch eine fahrerunabhängige Bremsdruckerhöhung das Fahrzeug wieder in den Stillstand gebracht.

Eine bekannte HHC-Funktion, wobei HHC für "Hill Hold Control" steht, sperrt den Bremsruck in der Bremsanlage ein, der zum Zeitpunkt des Stillstands vorliegt. Nach Verstreichen eines ca. 2 Sekunden langen Zeitintervalls ohne Bremspedalbetätigung wird der Druck automatisch abgebaut. Diese Funktion dient als Anfahrhilfe an Steigungen und Gefällen, um ohne Interaktion mit der Handbremse anfahren zu können.

Ein Verfahren zur Anfahrunterstützung für ein Fahrzeug auf einer geneigten Fahrbahn, das Hindernisse im vorderen sowie hinteren Bereich berücksichtigt, wird im Dokument FR 3 014 806 A1 beschrieben.

### Offenbarung der Erfindung

Die Erfindung betrifft ein Verfahren zur Durchführung einer fahrerunabhängigen Bremskrafthaltefunktion bei einem Kraftfahrzeug bei dessen Stillstand an einer in Fahrzeuglängsrichtung geneigten Fahrbahn, wobei die fahrerunabhängig aufrechterhaltene Bremskraft bei Erfülltsein bzw. Erfüllung einer vorgegebenen Lösebedingung abgebaut wird, wobei bei dem Verfahren
- mittels einer ersten Abstandssensorik der Bergaufabstand, welcher dem Abstand bzw. der Entfernung zum in Bergaufrichtung benachbarten Fahrzeug entspricht, ermittelt wird und
- bei Unterschreiten eines vorgegebenen Grenzwertes durch den Bergaufabstand die Bremskraft bereits vor Erfülltsein der Lösebedingung reduziert wird, so dass sich das Kraftfahrzeug bewegt.
Damit können Kollisionen durch eine plötzliche und unbeabsichtigte Rollbewegung des vor bzw. hinter dem eigenen Fahrzeug stehenden Fahrzeugs vermieden werden.

Die Erfindung ist dadurch gekennzeichnet, dass weiterhin mittels einer zweiten Abstandssensorik der Bergababstand, welcher dem Abstand zum in Bergabrichtung benachbarten Fahrzeug entspricht, ermittelt wird und bei Unterschreiten eines vorgegebenen Grenzwertes durch den Bergababstand die reduzierte Bremskraft wieder erhöht und das Kraftfahrzeug in den Stillstand gebracht wird.
Durch den fahrerunabhängigen Abbau der Bremskraft des eigenen Fahrzeugs setzt sich dieses in Bewegung, um eine fremdverschuldete Kollision zu vermeiden. Durch die erneute Erhöhung der Bremskraft wird, falls erforderlich, eine eigenverschuldete Kollision des eigenen Fahrzeugs durch dessen bewusst eingeleitete Rollbewegung vermieden.
Damit wird bei der Erfindung
- mittels einer Abstandssensorik der Vorderabstand zum vorausfahrenden Fahrzeug sowie der Hinterabstand zum nachfolgenden Fahrzeug ermittelt,
- im Falle einer bergauf geneigten Fahrbahn bei Unterschreiten eines vorgegebenen Grenzwertes durch den Vorderabstand und/oder im Falle einer bergab geneigten Fahrbahn bei Unterschreiten eines vorgegebenen Grenzwertes durch den Hinterabstand die Bremskraft bereits vor Erfülltsein der Lösebedingung abgebaut, so dass sich das Kraftfahrzeug bewegt.

In einer Ausgestaltung der Erfindung wird im Falle einer bergauf geneigten Fahrbahn bei Unterschreiten eines vorgegebenen Grenzwertes durch den Hinterabstand und/oder im Falle einer bergab geneigten Fahrbahn bei Unterschreiten eines vorgegebenen Grenzwertes durch den Vorderabstand die Bremskraft wieder erhöht und das Kraftfahrzeug in den Stillstand gebracht.

Eine vorteilhafte Ausgestaltung der Erfindung ist dadurch gekennzeichnet, dass es sich bei der ersten und zweiten Abstandssensorik um eine Ultraschallsensorik, eine Videosensorik oder eine Radarsensorik handelt.

Insbesondere ist die Ausgestaltung dadurch gekennzeichnet, dass es sich bei der ersten und zweiten Abstandssensorik um eine im Rahmen eines Einparkunterstützungssystems oder eines Einparksystems verwendete Abstandssensorik handelt. Dadurch kann ein doppelter Nutzen der Abstandssensorik erreicht werden.

Eine vorteilhafte Ausgestaltung der Erfindung ist dadurch gekennzeichnet, dass die Bremskrafthaltefunktion eine das Kraftfahrzeug im Stillstand haltende Bremskraft bei Vorliegen einer Fahrbahnneigung in Längsrichtung und einem Fahrzeugstillstand fahrerunabhängig aufrechterhält und es sich bei der vorgegebenen Lösebedingung um einen Anfahrwunsch der Fahrers handelt, insbesondere um eine Fahrpedalbetätigung durch den Fahrer. Dabei handelt es sich insbesondere um eine AVH-Funktion bzw. Automated-Vehicle-Hold-Funktion.

Eine vorteilhafte Ausgestaltung der Erfindung ist dadurch gekennzeichnet, dass weiterhin die Fahrbahnlängsneigung im Stillstand des Kraftfahrzeugs ermittelt wird und die fahrerunabhängig aufrechterhaltene Bremskraft abhängig von der ermittelten Fahrbahnlängsneigung ist. Die Ermittlung der Fahrbahnlängsneigung kann auch dazu benutzt werden, um festzustellen, ob eine bergauf oder bergab geneigte Fahrbahn vorliegt bzw. welches der benachbarten Fahrzeuge sich in Bergaufrichtung und welches sich in Bergabrichtung vom eigenen Fahrzeug befindet.

Insbesondere kann die Fahrbahnlängsneigung mittels eines Längsbeschleunigungssensors ermittelt werden.

Eine vorteilhafte Ausgestaltung der Erfindung ist dadurch gekennzeichnet, dass die Bremskrafthaltefunktion den zum Zeitpunkt des Fahrzeugstillstands vorherrschenden Bremsdruck aufrechterhält und dass es sich bei der vorgegebenen Lösebedingung um den Ablauf eines Zeitintervalls vorgegebener Länge nach Beendigung der Bremspedalbetätigung durch den Fahrer handelt. Dabei handelt es sich insbesondere um eine Hill-Hold-Control-Funktion bzw. HHC-Funktion.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

Die Zeichnung umfasst die Figuren 1 bis 3.
Fig. 1 zeigt ein mögliches Kollisionsszenario, welches mit der vorliegenden Erfindung vermieden werden soll.
Fig. 2 zeigt die Vermeidung der in Fig. 1 betrachteten Kollision durch den Einsatz der vorliegenden Erfindung.
Fig. 3 zeigt den grundlegenden Ablauf des erfindungsgemäßen Verfahrens.

Die im Stand der Technik betrachteten Funktionen AVH und HHC betrachten nur das eigene Fahrzeug. Das Umfeld wird im Rahmen dieser Funktionen nicht beobachtet und somit können diese Funktionen auch nicht auf Änderungen des Fahrzeugumfeldes reagieren.

Mit dem erfindungsgemäßen Verfahren können Bremskrafthaltesysteme in vollem Umfang weiter genutzt werden und zusätzlich kann mit minimalem Aufwand auf potentielle Auffahrunfälle reagiert werden, so dass Schäden am eigenen und am fremden Fahrzeug vermieden oder verringert werden.

Die Erfindung basiert auf der Verwendung einer Umfeldsensorik bzw. Abstandssensorik, welche das Umfeld bzw. den Abstand zum benachbarten Fahrzeug an der Vorder- und Rückseite erfasst. In den Stoßstangen der Fahrzeuge sind bereits heute in vielen Fällen Abstandssensoren eingebaut, welche zumeist auf der Basis von Ultraschall arbeiten. Damit lässt sich der Abstand zu Hindernissen vor bzw. hinter dem Fahrzeug abschätzen. Diese Information wird z.B. optisch oder akustisch dem Fahrer zur Anzeige gebracht. Dieser Abstand kann selbstverständlich auch mit optischen oder radarbasierten Verfahren ermittelt werden. Eine Radgeschwindigkeitsmessung oder Fahrzeuggeschwindigkeitsmessung kann z.B. mittels Raddrehzahlsensoren erfolgen. Damit kann das Vorliegen einer unbeabsichtigten Fahrzeugbewegung detektiert werden und daraufhin ein fahrerunabhängiger Bremsdruckaufbau erfolgen.

Weiter ist es mit Hilfe von Längsbeschleunigungssensoren möglich, im Stillstand die aktuelle Fahrbahnlängsneigung zu ermitteln. Diese Größe erlaubt die Ermittlung des Bremsdrucks, welcher notwendig ist, um das Fahrzeug sicher zu halten. Außerdem kann damit auch ermittelt werden, welches Anfahrmoment notwendig ist, damit das Fahrzeug ohne zurückzurollen sanft anfahren kann.

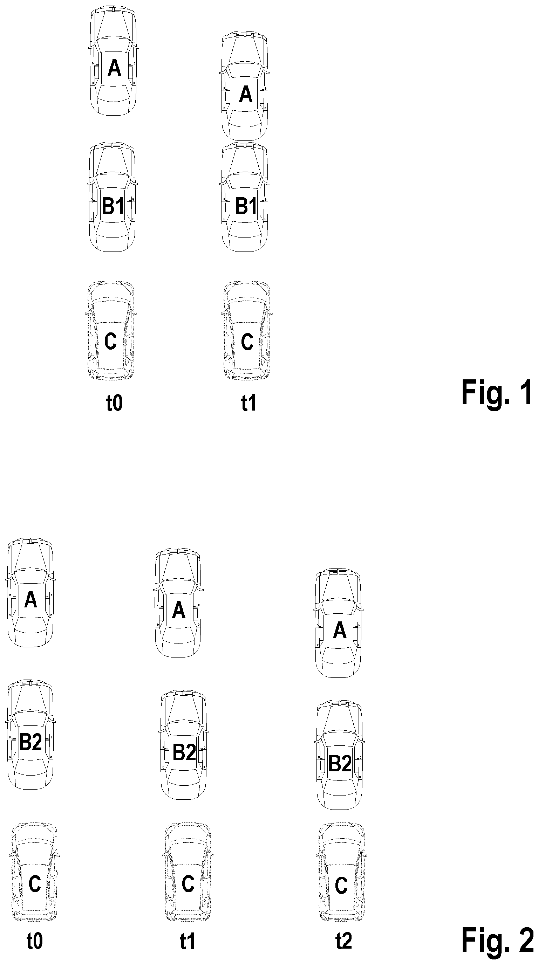

In Fig. 1 ist ein Szenario gezeigt, welches mit der vorliegenden Erfindung vermieden werden soll. Dabei werden drei Fahrzeuge A, B1 und C betrachtet, welche zum Zeitpunkt t0 an einer Steigung hintereinander anhalten. Dies ist in der linken Spalte von Fig. 1 dargestellt. Das Fahrzeug B1 sei mit einer AVH-Funktion ausgestattet, welche zum Zeitpunkt t0 auch aktiv ist und das Fahrzeug hält. Das vor B1 stehende Fahrzeug A besitze keine AVH-Funktion bzw. dessen AVH-Funktion ist deaktiviert. Beim Anfahrvorgang von A zum Zeitpunkt t1 kann es unbeabsichtigt dazu kommen, dass das Fahrzeug A sich unbeabsichtigt rückwärts bewegt. Ist der Abstand zwischen den Fahrzeugen A und B1 zu gering, dann kann es dazu kommen, dass das Fahrzeug A beim unbeabsichtigten Rückrollen auf das Fahrzeug B1 auffährt. Der Fahrer von B1 hätte, um diesen Auffahrunfall zu vermeiden, entweder die AVH-Funktion mittels Taster deaktivieren oder aber den Rückwärtsgang einlegen und zurückfahren müssen. Dies ist aber in der Kürze der Zeit oft nicht möglich.

In Fig. 2 wird dasselbe Szenario betrachtet, jedoch sei das Fahrzeug B2 mit einer gemäß der Erfindung modifizierten AVH-Funktion ausgestattet, welche zusätzlich über Abstandssensoren den Abstand zum vorhergehenden und nachfolgenden Fahrzeug erfasst und berücksichtigt. Diese sei zum Zeitpunkt t0, zu welchem die Fahrzeug A, B2 und C an einer bergauf weisenden Fahrbahnsteigung stehen, aktiv. Das Fahrzeug A besitze wieder keine AVH-Funktion oder aber diese ist bei ihm deaktiviert. Beim Anfahrvorgang von A kann es wiederum dazu kommen, dass A ungewollt und entgegen der gewünschten Fahrtrichtung rückwärts rollt. Ist der Abstand zwischen A und B2 gering, dann kann es sogar dazu kommen, dass A rückwärts auf B2 auffährt.

Allerdings wird im Fahrzeug B2 kontinuierlich der Abstand zum vorausfahrenden Fahrzeug A sowie dem nachfolgenden Fahrzeug C erfasst. Wir nun erkannt, dass der Abstand zwischen A und B2 zu gering wird, dann rollt B2 durch fahrerunabhängigen Bremsdruckabbau fahrerunabhängig zurück, solange kein Anfahrwunsch des Fahrers vorliegt und der Abstand zu C dies erlaubt. Dies ist für den Zeitpunkt t1 in der mittleren Spalte von Fig. 2 dargestellt. Rechtzeitig vor der Berührung mit C wird allerdings wieder fahrerunabhängig Bremsdruck aufgebaut, um eine Kollision von B2 mit C zu vermeiden. Durch diese fahrerunabhängig gesteuerte Rückrollbewegung, welche durch die Kopplung der AVH-Funktion mit der Abstandssensorik möglich ist, hat der Fahrer von A etwas mehr Zeit, die Rückrollbewegung seines Fahrzeugs zu stoppen und sein Fahrzeug wieder in den Stillstand oder eine Vorwärtsbewegung zu bringen.

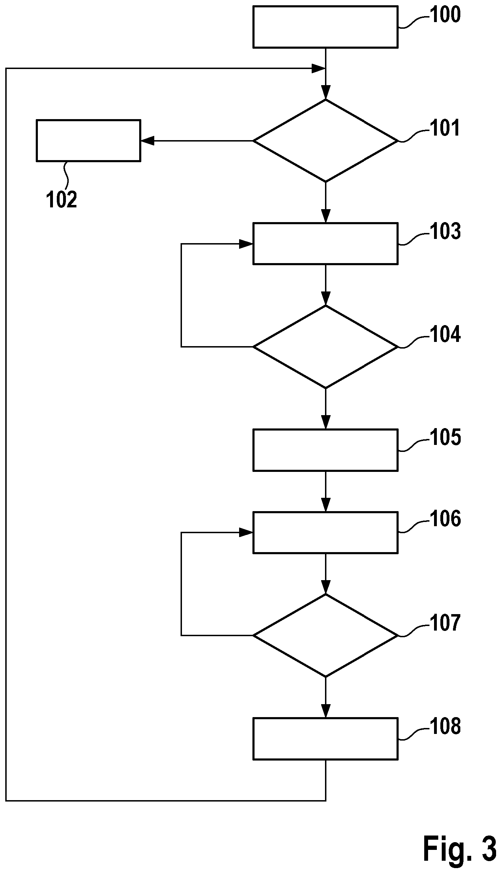

Der Ablauf einer Ausführungsform des erfindungsgemäßen Verfahrens ist in Fig. 3 dargestellt. Nach dem Start des Verfahrens in Block 100 mit der fahrerunabhängigen Aufrechterhaltung der Bremskraft in einem mit dem erfindungsgemäßen System ausgerüsteten Fahrzeug B2 wird in Block 101 abgefragt, ob eine vorgegebene Lösebedingung für den Abbau der Bremskraft erfüllt ist. Dies kann z.B. der Ablauf eines Zeitintervalls vorgegebener Länge sein oder auch eine Fahrpedalbetätigung durch den Fahrer. Ist dies der Fall, dann wird die Bremskraft abgebaut und das Verfahren in Block 102 beendet. Ist dies jedoch nicht der Fall, dann wird in Block 103 mittels einer ersten Abstandssensorik der Bergaufabstand, welcher dem Abstand zum in Bergaufrichtung benachbarten Fremdfahrzeug A entspricht, ermittelt. Dies ist der räumliche Abstand zu demjenigen in Längsrichtung benachbarten Fremdfahrzeug A, welches sich bei einem Wegrollen auf das Fahrzeug B2 zubewegen würde. Danach wird in Block 104 ermittelt, ob dieser Abstand einen Grenzwert unterschreitet. Ist dies nicht der Fall, dann wird zu Block 103 zurückgegangen. Ist der Grenzwert jedoch unterschritten, d.h. das Fremdfahrzeug A ist dem Fahrzeug B2 hinreichend nahe gekommen, dann wird in Block 105 die das Fahrzeug B2 haltende Bremskraft abgebaut, so dass dieses ebenfalls anrollt und der Abstand zum Fremdfahrzeug A idealerweise entweder konstant bleibt oder sich sogar wieder vergrößert. Allerdings muss jetzt überwacht werden, ob sich der Abstand zum ebenfalls benachbarten Fremdfahrzeug C verkleinert. Anschließend folgt deshalb Block 106, in dem mittels einer zweiten Abstandssensorik der Bergababstand, welcher dem Abstand zum in Bergabrichtung benachbarten Fahrzeug C entspricht, ermittelt wird. Dies ist der räumliche Abstand zu demjenigen in Längsrichtung benachbarten Fremdfahrzeug C, auf welches sich bei einem Wegrollen das Fahrzeug B2 zubewegen würde. In Block 107 wird deshalb danach ermittelt, ob der Bergababstand einen vorgegebenen Grenzwert unterschreitet. Ist dies nicht der Falls, dann wird zu Block 106 zurückgekehrt. Ist dies jedoch der Fall, dann wird in Block 108 die reduzierte Bremskraft wieder erhöht und das Kraftfahrzeug B2 in den Stillstand gebracht, um eine Kollision mit C zu vermeiden. Danach wird zu Block 101 zurückgekehrt. Dieses Verfahren dient dazu, die Wahrscheinlichkeit einer Kollision während der Bremskrafthaltephase einer Bremskrafthaltefunktion zu verringern.

## Patentansprüche

1. Verfahren zur Durchführung einer fahrerunabhängigen Bremskrafthaltefunktion bei einem Kraftfahrzeug (B2) bei dessen Stillstand an einer in Fahrzeuglängsrichtung geneigten Fahrbahn (100), wobei die fahrerunabhängig aufrechterhaltene Bremskraft bei Erfülltsein einer Lösebedingung abgebaut wird, bei dem
- mittels einer ersten Abstandssensorik der Bergaufabstand, welcher dem Abstand zum in Bergaufrichtung benachbarten Fahrzeug (A) entspricht, ermittelt wird (103) und
- bei Unterschreiten eines vorgegebenen Grenzwertes durch den Bergaufabstand (104) die Bremskraft bereits vor Erfülltsein der Lösebedingung reduziert wird (105), so dass sich das Kraftfahrzeug (B2) bewegt,
**dadurch gekennzeichnet, dass** weiterhin mittels einer zweiten Abstandssensorik der Bergababstand, welcher dem Abstand zum in Bergabrichtung benachbarten Fahrzeug (C) entspricht, ermittelt wird (106) und bei Unterschreiten eines vorgegebenen Grenzwertes durch den Bergababstand (107) die reduzierte Bremskraft wieder erhöht und das Kraftfahrzeug (B2) in den Stillstand gebracht wird (108).

2. Verfahren nach Anspruch 1, **dadurch gekennzeichnet, dass** es sich bei der ersten und zweiten Abstandssensorik um eine Ultraschallsensorik, eine Videosensorik oder eine Radarsensorik handelt.

3. Verfahren nach Anspruch 1, **dadurch gekennzeichnet, dass** es sich bei der ersten und zweiten Abstandssensorik um eine im Rahmen eines Einparkunterstützungssystems oder eines Einparksystems verwendete Abstandssensorik handelt.

4. Verfahren nach Anspruch 1, **dadurch gekennzeichnet, dass** die Bremskrafthaltefunktion eine das Kraftfahrzeug (B2) im Stillstand haltende Bremskraft bei Vorliegen einer Fahrbahnneigung in Längsrichtung und einem Fahrzeugstillstand fahrerunabhängig aufrechterhält und es sich bei der Lösebedingung um einen Anfahrwunsch der Fahrers handelt, insbesondere um eine Fahrpedalbetätigung durch den Fahrer.

5. Verfahren nach Anspruch 4, **dadurch gekennzeichnet, dass** weiterhin die Fahrbahnlängsneigung im Stillstand des Kraftfahrzeugs (B2) ermittelt wird und die fahrerunabhängig aufrechterhaltene Bremskraft abhängig von der ermittelten Fahrbahnlängsneigung ist.

6. Verfahren nach Anspruch 5, **dadurch gekennzeichnet, dass** die Fahrbahnlängsneigung mittels eines Längsbeschleunigungssensors ermittelt wird.

7. Verfahren nach Anspruch 1, **dadurch gekennzeichnet, dass** die Bremskrafthaltefunktion den zum Zeitpunkt des Kraftfahrzeugstillstands vorherrschenden Bremsdruck aufrechterhält und dass es sich bei der Lösebedingung um den Ablauf eines Zeitintervalls vorgegebener Länge nach Beendigung der Bremspedalbetätigung durch den Fahrer handelt.

8. Vorrichtung, enthaltend Mittel, die zur Durchführung der erfindungsgemäßen Verfahren ausgestaltet sind.

## Claims

1. Method for carrying out a driver-independent brake force holding function in a motor vehicle (B2) when the latter is stationary on a road (100) which is inclined in the longitudinal direction of the vehicle, wherein the braking force which is maintained independently of the driver is decreased when a release condition is satisfied, in which
- the uphill distance which corresponds to the distance from the vehicle (A) which is adjacent in the uphill direction is determined (103) by means of a first distance sensor system, and
- when a predefined limiting value is undershot by the uphill distance (104) the braking force is already reduced (105) when the release condition is satisfied, so that the motor vehicle (B2) moves,
**characterized in that** the downhill distance which corresponds to the distance from the vehicle (C) which is adjacent in the downhill direction is also determined (106) by means of a second distance sensor system, and when a predefined limiting value is undershot by the downhill distance (107) the reduced braking force is increased again and the motor vehicle (B2) is placed (108) in the stationary state.

2. Method according to Claim 1, **characterized in that** the first and second distance sensor systems are an ultrasonic sensor system, a video sensor system or a radar sensor system.

3. Method according to Claim 1, **characterized in that** the first and second distance sensor systems are a distance sensor system which is used within the scope of a parking assistance system or a parking system.

4. Method according to Claim 1, **characterized in that** the braking force maintaining function maintains, independently of the driver, a braking force which keeps the vehicle (B2) in the stationary state when an inclination of the road is present in the longitudinal direction and when a stationary state of the vehicle is present, and the release condition is a starting request of the driver, in particular activation of the accelerator pedal by the driver.

5. Method according to Claim 4, **characterized in that** the road longitudinal inclination in the stationary state of the motor vehicle (B2) is further determined, and the braking force which is maintained independently of the driver is dependent on the determined longitudinal inclination of the road.

6. Method according to Claim 5, **characterized in that** the longitudinal inclination of the road is determined by means of a longitudinal acceleration sensor.

7. Method according to Claim 1, **characterized in that** the braking force maintaining function maintains the brake pressure, which prevails at the time of the stationary state of the motor vehicle, and the release condition is the expiry of a time interval of a predefined length after the ending of the activation of the brake pedal by the driver.

8. Device containing means which are equipped to carry out the methods according to the invention.

## Revendications

1. Procédé pour mettre en œuvre une fonction de maintien de la force de freinage indépendamment du conducteur dans un véhicule automobile (B2) à l'arrêt sur une chaussée (100) inclinée dans la direction longitudinale du véhicule, la force de freinage maintenue indépendamment du conducteur étant réduite si une condition de relâchement est satisfaite, procédé dans lequel
- on détermine (103), au moyen d'un premier système de capteur de distance, la distance en montée qui correspond à la distance au véhicule (A) adjacent dans la direction de montée et
- lorsque la distance en montée (104) passe en dessous d'une valeur limite prédéfinie, la force de freinage est réduite (105) déjà avant que la condition de relâchement soit satisfaite, de sorte que le véhicule automobile (B2) se déplace,
**caractérisé en ce que** la distance en descente qui correspond à la distance au véhicule (C) adjacent dans le sens de la descente est en outre déterminée (106) au moyen d'un deuxième système de capteur de distance et lorsque la distance en descente (107) passe en dessous d'une valeur limite prédéfinie, la force de freinage réduite est à nouveau accrue et le véhicule automobile (B2) est amené à l'arrêt (108).

2. Procédé selon la revendication 1, **caractérisé en ce que** le premier et le deuxième système de capteur de distance sont un système de capteur à ultrasons, un système de capteur vidéo ou un système de capteur radar.

3. Procédé selon la revendication 1, **caractérisé en ce que** le premier et le deuxième système de capteur de distance sont un système de capteur de distance utilisé dans le cadre d'un système d'assistance au stationnement ou d'un système de stationnement.

4. Procédé selon la revendication 1, **caractérisé en ce que** la fonction de maintien de la force de freinage maintient indépendamment du conducteur une force de freinage maintenant à l'arrêt le véhicule automobile (B2) en présence d'une pente de la chaussée dans la direction longitudinale et à l'arrêt du véhicule et la condition de relâchement est un souhait de démarrage du conducteur, en particulier un actionnement de la pédale d'accélérateur par le conducteur.

5. Procédé selon la revendication 4, **caractérisé en ce que** l'inclinaison longitudinale de la chaussée est en outre déterminée à l'arrêt du véhicule automobile (B2) et la force de freinage maintenue indépendamment du conducteur dépend de l'inclinaison longitudinale de la chaussée déterminée.

6. Procédé selon la revendication 5, **caractérisé en ce que** l'inclinaison longitudinale de la chaussée est déterminée au moyen d'un capteur d'accélération longitudinale.

7. Procédé selon la revendication 1, **caractérisé en ce que** la fonction de maintien de la force de freinage maintient la pression de 'freinage régnant à l'instant de l'arrêt du véhicule automobile et **en ce que** la condition de relâchement est le déroulement d'un intervalle de temps de longueur prédéfinie après la fin de l'actionnement de la pédale de freinage par le conducteur.

8. Dispositif contenant des moyens qui sont configurés pour mettre en œuvre le procédé selon l'invention.
